# EUROPÄISCHE PATENTSCHRIFT

(11) **EP 0 738 527 B1**
(45) Veröffentlichungstag und Bekanntmachung des Hinweises auf die Patenterteilung: **16.06.1999**
(21) Anmeldenummer: 96103370.1
(22) Anmeldetag: 05.03.1996
(51) Int. Cl.: B01D 25/12, B01D 25/176

(54) **Plattenfilterpresse**
Plate filter press
Filtre-presse à plaques

(30) Priorität: 20.04.1995 DE 19514570
(43) Veröffentlichungstag der Anmeldung: 23.10.1996
(73) Patentinhaber: RITTERSHAUS & BLECHER GMBH, 42369 Wuppertal (DE)
(72) Erfinder: Oelbermann, Max, Dipl.-Ing., 42853 Remscheid (DE)
(74) Vertreter: Christl, Hermann, Dipl.-Ing.

(56) Entgegenhaltungen:
- DE-A- 3 842 662
- GB-A- 2 091 575
- GB-A- 2 182 861
- US-A- 4 397 746

## Beschreibung

Die Erfindung betrifft eine Plattenfilterpresse mit Preßmembranen, mit einer Anordnung abwechselnd von Kammerplattenfiltern und Membranplattenfiltern, deren beiden Seiten jeweils ein Filtertuch zugeordnet ist, mit in den Kammerplatten angeordneter zentraler Trübe-Durchströmöffnung, die einen den Öffnungsrand umgreifenden Stützring zur Abstützung einer benachbarten ausgewölbten Membran trägt, und mit in den Membranträgerplatten und Membranen angeordneter zentraler Trübe-Durchströmöffnung, an deren beiden Seiten je ein Klemmring angeordnet ist, mit denen an jeder Membranträgerplatte zwei Membranen lösbar befestigt sind.

Bei einer bekannten Kammerfilterpresse der eingangs genannten Art (z. B. Broschüre "Membran-System" bei Membranfilter-Pressen der Rittershaus & Blecher GmbH) ist der in den zentralen Trübe-Durchströmöffnungen der Kammerplatten jeweils angeordnete Stützring zweiteilig ausgebildet, d. h. er ist aus zwei Ringhälften zusammengesetzt mit einer Teilungsfuge, die in der Kammerplatten-Mittelebene liegt. Die Stützringhälften müssen durch Befestigungsmittel miteinander bzw. mit der Kammerplatte im Randbereich von deren zentraler Trübe-Durchströmöffnung fest verbunden sein. Der Außendurchmesser der Stützringhälften ist größer als der Durchmesser der zentralen Trübe-Durchströmöffnung der Kammerplatte. Für einen ausreichend großen Einlaufquerschnitt für die aus der zentralen Trübe-Durchströmöffnung über einen radialen Strömungskanal jeweils in eine Filterkammer gedrückte Trübe ist ein entsprechender Abstand zwischen den Seitenflächen der Stützringhälften und des jeweils benachbarten Preßmembran-Klemmringes einzuhalten. Dieser Abstand darf jedoch nicht so groß werden, daß die durch das Druckmedium ausgewölbte bzw. von der jeweiligen Membranträgerplatte abgespreizte Preßmembran sich nicht mehr an der jeweils benachbarten Stützringhälfte abstützen kann, ohne dabei beschädigt zu werden. Daher führte das Vorsehen der Stützringhälften mit seitlichen Membrananlageflächen stets zu einem Kompromiß hinsichtlich des Einlaufquerschnitts des jeweiligen radialen Strömungskanals, d. h. hinsichtlich des einerseits für die Trübeströmung notwendig großen und andererseits für die Preßmembranabstützung nicht zu großen Abstandes zwischen den einander gegenüberliegenden Seitenflächen der Stützringhälften und der Preßmembran-Klemmringe, welche Seitenflächen zwischen sich den radialen Trübeeinlauf-Strömungskanal begrenzen.

Der Erfindung liegt die Aufgabe zugrunde, eine Plattenfilterpresse der eingangs genannten Art zu schaffen, bei der mit einfachen baulichen Mitteln ein genügend großer, frei von Verstopfungen bleibender radialer Trübeeinlaufquerschnitt zwischen den benachbarten Platteneinheiten erreicht wird, ohne daß die Gefahr besteht, daß infolge relativ großen Abstandes voneinander die ausgewölbten bzw. abgespreizten Preßmembranen sich nicht mehr ausreichend am zentralen Stützring der jeweils benachbarten Kammerplatte abstützen können.

Diese Aufgabe wird erfindungsgemäß mit der Maßnahme des Kennzeichnungsteils des Anspruchs 1 gelöst. Vorteilhafte Weiterbildungen sind in den Unteransprüchen angegeben.

Dadurch, daß bei der erfindungsgemäßen Plattenfilterpresse der den Rand der Durchströmöffnung der Kammerplatten umgreifende Stützring als ringförmige Abstützmanschette mit im Randbereich U-förmigem Querschnitt ausgebildet ist, wobei jeder U-Schenkel endseitig einen seitlich in Richtung der jeweils benachbarten Membran vorspringenden und den radialen Strömungskanal zum jeweiligen Filtertaum im wesentlichen nicht verengenden ringförmigen Anlagekeil aufweist, wird eine Reihe von Vorteilen erreicht. So kann der Abstand zwischen den einander zugekehrten Seitenflächen der Abstützmanschette und des benachbarten Klemmringes der benachbarten Membranplatte vergleichsweise groß gewählt werden, was einen großen Einlaufquerschnitt des radialen Trübeeinlauf-Strömungskanals zur Folge hat.

Der Einlaufquerschnitt wird auch nicht auf Höhe der Außenrandfläche des jeweiligen Klemmringes reduziert, weil dort radial nach außen versetzt der vorspringende ringförmige Anlagekeil der Abstützmanschette eine etwa kegelstumpfmantelförmige Strömungsleitfläche aufweist. Wichtig ist, daß der seitlich vorspringende ringförmige Anlagekeil, der radial weiter außen liegt als die Außenrandflächen des jeweils benachbarten Klemmringes einer benachbarten Membrane, eine zum Außenrand der Abstützmanschette hin abfallende etwa kegelmantelstumpfförmige Schrägfläche aufweist, so daß trotz des vergleichsweise groß bemessenen Einlaufquerschnittes der Trübeströmung sich die jeweilige Membran in ihrer nach außen gewölbten Stellung optimal an der etwa kegelstumpfmantelförmigen Schrägfläche der Abstützmanschette anlegen kann.

Die erfindungsgemäß gestalteten Abstützmanschetten können sowohl bei neu zu bauenden Membranplatten-Filterpressen als auch für die Umrüstung vorhandener Filterpressen in Membranplatten-Filterpressen mit Erfolg eingesetzt werden.

Die jeweils von der Abstützmanschette seitlich vorspringenden ringförmigen Anlagekeile sind so angeordnet, daß ein sich in radialer Richtung gesehen nicht verringernder Abstand zwischen den einander gegenüberliegenden Seitenflächen von Kammerplattenfiltern und Membranplattenfiltern aufrechterhalten wird.

Zur weiteren strömungstechnischen Verbesserung des Trübeeinlaufes kann nach einem weiteren Merkmal der Erfindung die Abstützmanschette in Richtung nach radial innen vorgelagert zu der Strömungsleitfläche des Anlagekeils eine weitere Strömungsleitfläche aufweisen, welche in Richtung nach radial innen zu einer weiteren Vergrößerung des Abstandes der Seitenflächen führt. Die in die Durchströmöffnung eingedrückte Trübe gelangt daher über ein Zweistufen-System gelenkt in den jeweiligen sich zwischen zwei gegenüberliegenden Filterplatten befindlichen Filterraum.

Es hat sich als strömungstechnisch günstig erwiesen, wenn alle Strömungsleitflächen der Abstützmanschette im wesentlichen ebenflächig sind unter Ausbildung eines Keilwinkels in Bezug zur Plattenlängsmittelebene. Dabei bietet es sich an, den Keilwinkel der etwa kegelstumpfmantelförmigen Strömungsleitflächen etwa gleich groß zu machen. So kann der Keilwinkel z. B. etwa 30° betragen.

Nach einem weiteren Merkmal der Erfindung können die beiden sich gegenüberliegenden weiteren Strömungsleitflächen der Abstützmanschette im Bereich der Plattenlängsmittelebene im wesentlichen gerundet ineinander übergehen. Diese Rundung der Abstützmanschette verbessert einerseits das Einströmen der Trübe in den Einlaufquerschnitt, und sie führt andererseits zur Schonung des die Abstützmanschette umfassenden Filtertuches.

Die Montage der Abstützmanschette an einer Kammerplatte ist dadurch vereinfacht, daß nach einem weiteren Merkmal der Erfindung die Abstützmanschette aus einem elastischen gummiartig flexiblen Werkstoff, z. B. aus einem Gummiformteil besteht, das lösbar mit der Kammerplatte verbindbar ist. Als Alternative kann die Abstützmanschette an die Kammerplatte angeformt und mit dieser einstückig sein. Diese Lösung käme bei neuen Plattenfilterpressen in Frage, die sofort mit Membranplatten ausgerüstet werden. Selbstverständlich ist eine Nachrüstung bereits vorhandener Kammerplatten mit erfindungsgemäß gestalteten Abstützmanschetten gleichfalls möglich. Es wäre auch möglich, die Abstützmanschette jeweils integriert in das der Kammerplatte zugeordnete Filtertuch auszubilden.

Nach einem weiteren Merkmal der Erfindung kann die Abstützmanschette als einteilige Ringmanschette ausgebildet oder aus zwei Ringhälften mit mittiger Teilungsfuge zusammengesetzt sein. Beim Zusammensetzen einer Abstützmanschette aus zwei Ringhälften wäre es erforderlich, die beiden Hälften nach ihrer Positionierung an der Kammerplatte durch entsprechende Verbindungselemente zu einer Einheit zusammenzufassen.

Die Erfindung und deren weiteren Merkmale und Vorteile werden anhand des in den Figuren schematisch dargestellten Ausführungsbeispieles näher erläutert.

Es zeigt:
- Fig. 1:: einen Vertikalschnitt durch den dem zentralen Trübekanal benachbarten Zentralbereich eines Kammerplatten und Membranträgerplatten aufweisenden Plattenpaketes einer Plattenfilterpresse,
- Fig. 2:: in etwa natürlicher Größe einen Ausschnitt der Fig. 1 im Bereich zweier einander benachbarter Filterplatten, und
- Fig. 3:: einen Längsschnitt durch eine in den Fig. 1 und 2 zu sehenden Abstützmanschette herausgezeichnet im Detail.

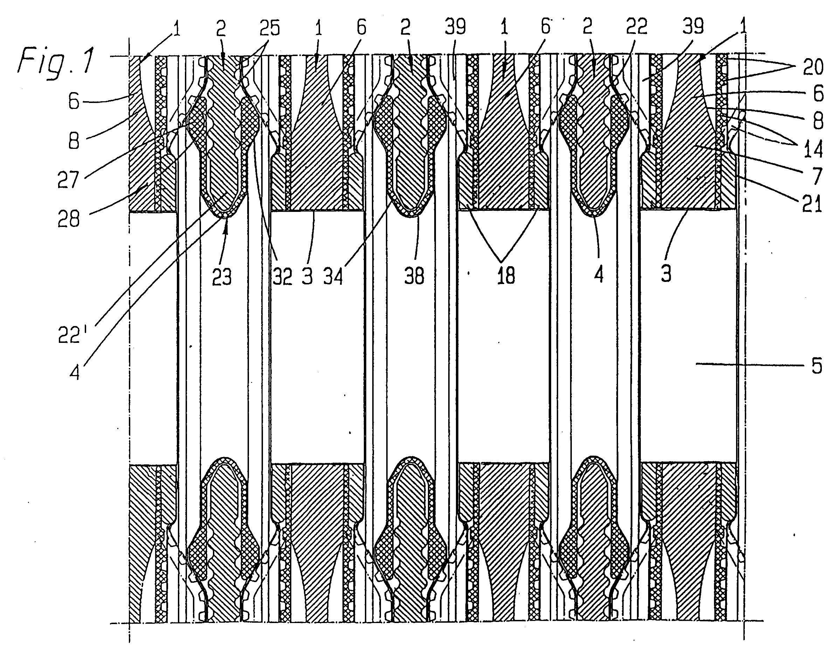

Die in Fig. 1 ausschnittsweise im Längsschnitt veranschaulichte Filteranordnung ist Bestandteil einer Membranplatten-Filterpresse. Im einzelnen setzt sich das Filterpaket aus abwechselnd hintereinander angeordneten Membranplattenfiltern (1) und Kammerplattenfiltern (2) zusammen, welche beim Ausführungsbeispiel einen quadratischen Grundriß besitzen. Ein runder oder rechteckiger Grundriß wäre ebenfalls möglich. Mittig sind die hintereinander angeordneten Plattenfilter (1, 2) mit je einer Trübe-Durchströmöffnung (3, 4) versehen unter Bildung eines als Ganzes mit der Ziffer (5) bezeichneten zentralen Trübekanals, in welchen die Trübe unter Druck eingeleitet wird.

Jeder Membranplattenfilter (1) besitzt eine Membranträgerplatte (6), welche im Ausführungsbeispiel beidseitig eine randseitige Verdickung (7) aufweist, auch im Randbereich der Durchströmöffnung (3). Über Rundungen (8) geht die Randverdickung (7) in die planen Seitenflächen (9) über. Es wären aber auch ebene glatte Membranträgerplatten möglich.

An beiden Seiten der Randverdickung (7) der Membranträgerplatte (6) befindet sich im Bereich des Trübekanals (5) je ein Klemmring (18), dessen Innenöffnung dem Durchmesser der Durchströmöffnung (3) der Membranträgerplatte (6) angepaßt ist. Mittels der Klemmringe (18) sind an einer Membranträgerplatte (6) jeweils zwei Membranen (14) lösbar verspannt, mit einer Innenöffnung, die ebenfalls dem Durchmesser der Durchströmöffnung (3) entspricht.

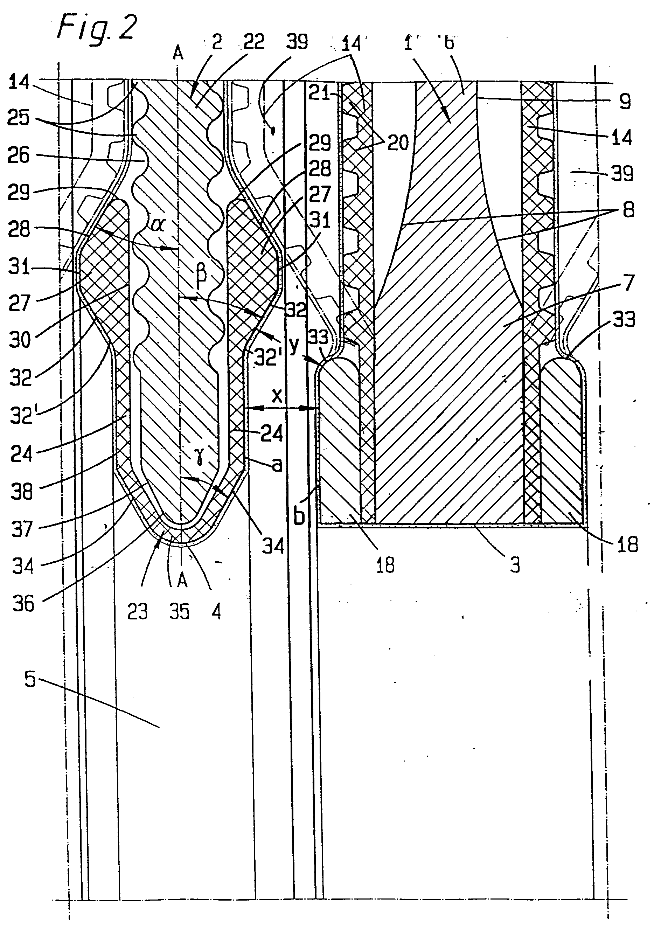

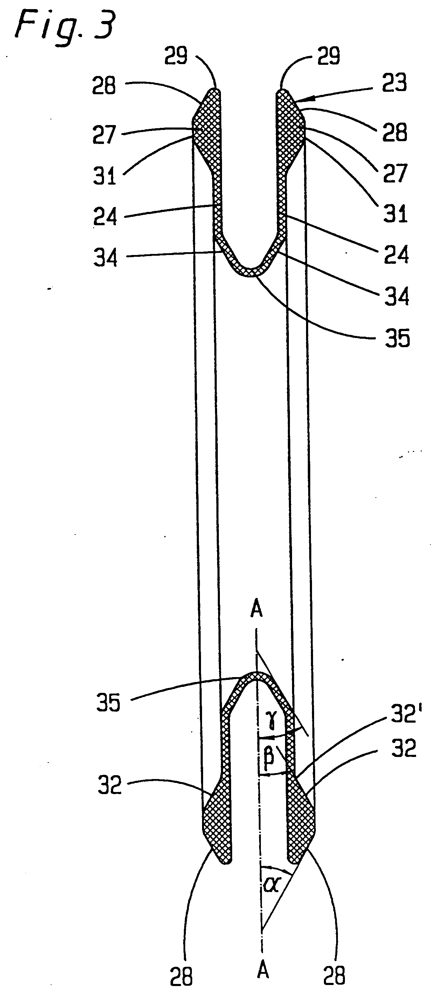

Wie insbesondere Fig. 2 veranschaulicht, ist jede Membran (14) auf ihrer dem Kammerplattenfilter (2) zugekehrten Seite mit punktuell angeordneten Erhöhungen (20) versehen, auf welchen ein den Membranplattenfilter (1) umhüllendes Filtertuch (21) aufliegt. Letzteres umfaßt auch den durchströmöffnungsseitigen Bereich des Membranplattenfilters (1).

Der Kammerplattenfilter (2) weist eine Kammerplatte (22) auf, die im Bereich ihrer Durchströmöffnung (4) eine ringförmige Abstützmanschette (23) trägt, deren Randbereich im Querschnitt U-förmig gestaltet ist. Die beiden U-Schenkel (24) liegen an den Kammerplatten-Seitenflächen an, welche vorstehende Rippen (25) ausbilden, die ihrerseits zwischen sich Vertiefungen (26) belassen.

In radialer Richtung vom Zentrum nach außen gesehen überragen die U-Schenkel (24) der Abstützmanschette (23) die Klemmringe (18). Jeder U-Schenkel (24) weist endseitig einen seitlich in Richtung der jeweils benachbarten Membran (14) vorspringenden ringförmigen Anlagekeil (27) auf, welcher eine radial nach außen versetzte, zur Kammerplatten-Seitenfläche abfallende Schrägfläche (28) ausbildet. Diese schließt zur Kammerplatten-Längsmittelebene A-A einen Winkel α von etwa 30° ein. Sodann geht die Schrägfläche (28) über eine Rundung (29) in die Innenwand (30) des U-Schenkels (24) über. An das radial einwärts liegende Ende der Schrägfläche (28) des Anlagekeils (27) schließt sich eine parallel zur Kammerplatten-Seitenfläche verlaufende Dachabkappung (31) an. Deren radiale Länge ist geringer als diejenige der Schrägfläche (28). Vorgelagert der Schrägfläche (28) und der Dachabkappung (31) ist eine Strömungsleitfläche (32) angeordnet, welche von der anderen Dachneigung des Anlagekeils (27) gebildet wird. Die Strömungsleitfläche (32) verläuft im wesentlichen ebenflächig unter Ausbildung eines Keilwinkels β von etwa 30° in Bezug zur Längsmittelebene A-A der Kammerplatte (22). Ferner ist die Strömungsleitfläche (32) nach radial außen bezüglich einer gerundeten Außenrandfläche (33) des Klemmringes (18) versetzt, und zwar so, daß der Abstand x zwischen den einander gegenüberliegenden Seitenflächen a, b des Klemmringes (18) und der Abstützmanschette (23) im wesentlichen nicht verringert ist. Insbesondere geht dies aus Fig. 2 hervor, wobei der Abstand y zwischen der Strömungsleitfläche (32) und der Außenrandfläche (33) etwa dem Abstand x entspricht.

Ausgehend von dem Fußbereich (32') der Strömungsleitfläche (32) schließt sich die vorgenannte Seitenfläche a an. Diese verläuft so, daß sich der Abstand x zwischen den Seitenflächen a, b im wesentlichen nicht vermindert, sondern, wie dargestellt, radial zur Durchströmöffnung (4) und daher parallel zur Seitenfläche b des Klemmringes (18) verläuft.

Jeder U-Schenkel (24) der Abstützmanschette (23) bildet nach radial innen vorgelagert zur Strömungsleitfläche (32) eine weitere Strömungsleitfläche (34) aus. Wie Fig. 1 und 2 zu entnehmen ist, führt diese Strömungsleitfläche (34) in Richtung radial innen zu einer weiteren Vergrößerung des Abstandes der Seitenflächen a, b verbunden mit einer Vergrößerung des vom Trübekanal (5) ausgehenden Einlaufquerschnittes. Auch diese Strömungsleitfläche (34) verläuft im wesentlichen ebenflächig und schließt einen Keilwinkel γ in Bezug zu der Längsmittelebene A-A von ca. 30° ein. D. h., die Keilwinkel β, γ beider Strömungsleitflächen (32, 34) können etwa gleich groß sein.

Die beiden gegenüberliegenden weiteren Strömungsleitflächen (34) gehen über eine Rundung (35) ineinander über, welche Rundung etwa konzentrisch verläuft zur Öffnungsrandkante (36) der Durchströmöffnung (4) der Kammerplatte (22).

Die U-Schenkel (24) finden Abstützung an dem Rippenfeld (25) der Kammerplatte (22). Der radial einwärts gerichtete Abschnitt (22') der Kammerplatte (22) ist dünner gestaltet und gegenüber der Manschettenrundung (35) zurückversetzt, so daß zwischen diesem Abschnitt (22') und den U-Schenkein (24) sowie der Öffnungsrandkante (36) ein schmaler Spalt (37) vorliegt.

Die Kammerplatte (22) nebst Abstützmanschette (23) ist umhüllt von einem Filtertuch (38).

Durch das Nachpressen wird die Restfeuchte des Filterkuchens noch weiter gesenkt sowie die Kuchenabnahme erleichtert. Die festen, den Filterkuchen bildenden Bestandteile der Trübe werden vom Filtertuch der Membranplattenfilter (1) und Kammerplattenfilter (2) aufgefangen, während die das Filtertuch durchsetzende Filtratflüssigkeit in bekannter Weise abgeleitet wird. Die in den Trübekanal (5) unter Druck eingeleitete Trübe gelangt über die Einlaufquerschnitte zwischen die einander gegenüberliegenden Plattenfilter (1, 2) in den Filterraum (39). Werden nun die Membranen (14) mit einem flüssigen oder gasförmigen Druckmittel beaufschlagt, wölben sich die Preßmembranen (14) aus, wobei, wie aus Fig. 2 in strichpunktierter Darstellung ersichtlich, die konzentrisch zum Trübekanal verlaufenden Bereiche der Membranen (14) sich an den betreffenden Schrägflächen (28) der Anlagekeile (27) der Abstützmanschette (23) anlegen, wobei in Fig. 1 und 2 mit den strichpunktierten Linien das Nachpressen in die jeweils leere Kammer veranschaulicht ist. Dabei verhindern die Anlagekeile (27) wirkungsvoll eine mechanische Zerstörung der flexiblen Membranplatten (14).

Die Abstützmanschette (23) besteht beim Ausführungsbeispiel aus einem gummiartig flexiblen Werkstoff und kann nachträglich bereits vorhandenen Kammerplatten (22) leicht zugeordnet werden, was einer Umrüstung einer vorhandenen Kammerplatten-Filterpresse zu einer Membranplatten-Filterpresse sehr entgegenkommt.

## Patentansprüche

1. Plattenfilterpresse mit Preßmembranen, mit einer Anordnung abwechselnd von Kammerplattenfiltern (2) und Membranplattenfiltern (1), deren beiden Seiten jeweils ein Filtertuch (38 bzw. 21) zugeordnet ist, mit in den Kammerplatten (22) angeordneter zentraler Trübe-Durchströmöffnung (4), die einen den Öffnungsrand umgreifenden Stützring zur Abstützung einer benachbarten ausgewölbten Membran (14) trägt, und mit in den Membranträgerplatten (6) und Membranen (14) angeordneter zentraler Trübe-Durchströmöffnung (3), an deren beiden Seiten je ein Klemmring (18) angeordnet ist, mit denen an jeder Membranträgerplatte (6) zwei Membranen (14) lösbar befestigt sind, dadurch gekennzeichnet, daß der den Rand der Durchströmöffnung (4) der Kammerplatten (22) umgreifende Stützring als ringförmige Abstützmanschette (23) mit im Randbereich U-förmigem Querschnitt ausgebildet ist, und daß jeder U-Schenkel (24) endseitig einen seitlich in Richtung der jeweils benachbarten Membran (14) vorspringenden und den radialen Strömungskanal zum jeweiligen Filterraum (39) im wesentlichen nicht verengenden ringförmigen Anlagekeil (27) aufweist.

2. Plattenfilterpresse nach Anspruch 1, dadurch gekennzeichnet, daß der ringförmige Anlagekeil (27) in seinem Peripheriebereich eine mit Keilwinkel (α) zur Plattenlängsmittelebene (A-A) abfallende etwa kegelstumpfmantelförmige Schrägfläche (28) zur Abstützung der jeweils benachbarten ausgewölbten bzw. abgespreizten Membran (14) und in seinem radial nach innen gewandten Bereich eine mit Keilwinkel (β) zur Plattenebene (A-A) abfallende etwa kegelstumpfmantelförmige Strömungsleitfläche (32) aufweist, wobei die Anlagekeile (27) sowie deren etwa kegelmantelstumpfförmigen Flächen (28 und 32) radial weiter außen liegen als die Außenrandflächen (33) des jeweils benachbarten Klemmringes (18) einer benachbarten Membrane (14) zwecks Aufrechterhaltung eines sich in radialer Richtung gesehen nicht verringernden Abstandes (x) zwischen den einander gegenüberliegenden Seitenflächen (a, b) von Kammerplattenfiltern (2) und Membranplattenfiltern (1).

3. Plattenfilterpresse nach Anspruch 2, dadurch gekennzeichnet, daß die Abstützmanschette (23) in Richtung nach radial innen vorgelagert zu der Strömungsleitfläche (32) des Anlagekeils (27) eine weitere Strömungsleitfläche (34) aufweist, welche in Richtung nach radial innen zu einer weiteren Vergrößerung des Abstandes (x) der Seitenflächen (a, b) führt.

4. Plattenfilterpresse nach Anspruch 3, dadurch gekennzeichnet, daß die weitere Strömungsleitfläche (34) unter einem Keilwinkel (γ) zur Längsmittelebene (A-A) der Kammerplatte (22) verläuft.

5. Plattenfilterpresse nach einem der Ansprüche 1 bis 4, dadurch gekennzeichnet, daß die Keilwinkel (α, β, γ) etwa gleich groß sind.

6. Plattenfilterpresse nach Anspruch 3, dadurch gekennzeichnet, daß die beiden gegenüberliegenden weiteren Strömungsleitflächen (34) der Abstützmanschette (23) im Bereich der Mittelebene (A-A) im wesentlichen gerundet ineinander übergehen.

7. Plattenfilterpresse nach einem oder mehreren der Ansprüche 1 bis 6, dadurch gekennzeichnet, daß die Abstützmanschette (23) aus einem elastischen gummiartig flexiblen Werkstoff, z. B. aus einem Gummiformteil besteht, das lösbar mit der Kammerplatte (22) verbindbar ist.

8. Plattenfilterpresse nach einem der Ansprüche 1 bis 6, dadurch gekennzeichnet, daß die Abstützmanschette an die Kammerplatte (22) angeformt und mit dieser einstückig ist.

9. Plattenfilterpresse nach einem der Ansprüche 1 bis 7, dadurch gekennzeichnet, daß die Abstützmanschette integriert in das der Kammerplatte (22) zugeordnete Filtertuch (38) ausgebildet ist.

10. Plattenfilterpresse nach einem der Ansprüche 1 bis 7, dadurch gekennzeichnet, daß die Abstützmanschette (23) als einteilige Ringmanschette ausgebildet ist oder aus zwei Ringhälften mit mittiger Teilungsfuge (A-A) zusammengesetzt ist.

## Claims

1. A plate filter press comprising: press diaphragms; an arrangement of alternating chamber plate filters (2) and diaphragm plate filters (1), each associated on both sides with a filter cloth (38 or 21); a central pulp flow opening (4) disposed in the chamber plates (22) and bearing a supporting ring which surrounds the edge of the opening and supports a neighbouring diaphragm (14) when it bulges; and a central flow pulp opening (3) disposed in the diaphragm-carrying plates (6) and diaphragms (14), a clamping ring (18) being disposed on both sides of the opening for releasably fastening two diaphragms (14) to each diaphragm-carrying plate (6), characterised in that the supporting ring surrounding the edge of the flow opening (4) in the chamber plates (22) is in the form of an annular supporting sleeve (23) having a U-shaped cross-section in the end region, and each U-arm (24) ends in an annular abutment wedge (27) which projects sideways towards the respective neighbouring diaphragm (14) and does not substantially reduce the radial flow channel to the respective filter chamber (39).

2. A plate filter press according to claim 1, characterised in that in its peripheral region, the annular abutment wedge (27) has an approximately frusto-conical surface (28) which slopes down at a wedge angle (α) to the longitudinal central plane (A-A) of the plate, in order to support the neighbouring diaphragm (14) when it bulges or is stretched, whereas in its radially inwardly facing region the wedge has an approximately frusto-conical flow guide surface (32) which slopes at a wedge angle (β) down to the plate plane (A-A), and the wedges (27) and their approximately frusto-conical surfaces (28 and 32) are radially further outward than the outer edge surfaces (33) of the respective neighbouring clamping ring (18) of a neighbouring diaphragm (14), in order to maintain a non-reduced spacing (x) in the radial direction between the facing side surfaces (a, b) of the chamber plate filters (2) and the diaphragm plate filters (1).

3. A plate filter press according to claim 2, characterised in that the supporting sleeve (23) has an additional flow guide surface (34) which in the radially inward direction is in front of the flow guide surface (32) of the abutment wedge (27) and which, in the radially inward direction, results in a further increase in the spacing (x) between the side surfaces (a, b).

4. A plate filter press according to claim 3, characterised in that the additional flow guide surface (34) is at a wedge angle (γ) to the longitudinal central plane (A-A) of the chamber plate (22).

5. A plate filter press according to any of claims 1 to 4, characterised in that the wedge angles (α, β, γ) are approximately equal.

6. A plate filter press according to claim 3, characterised in that the two facing additional flow guide surfaces (34) of the sleeve (23) substantially bend and merge into one another in the neighbourhood of the central plane (A-A).

7. A plate filter press according to one or more of claims 1 to 6, characterised in that the sleeve (23) is made of elastic rubber-like flexible material, e.g. a rubber moulded part, which can be releasably connected to the chamber plate (22).

8. A plate filter press according to any of claims 1 to 6, characterised in that the supporting sleeve is integrally moulded on and in one piece with the chamber plate (22).

9. A plate filter press according to any of claims 1 to 7, characterised in that the sleeve is incorporated in the filter cloth (38) associated with the chamber plate (22).

10. A plate filter press according to any of claims 1 to 7, characterised in that the sleeve (23) is in the form of a one-part annular sleeve or is made up of two half-rings separated by a central joint (A-A).

## Revendications

1. Filtre-presse à plaques comportant des membranes de presse, avec un agencement alterné de filtres à plaque à chambres (2) et de filtres à plaques à membrane (1), à chacune des deux faces desquelles est associée un tissu filtrant (38, respectivement 21), avec une ouverture de passage de boue (4) centrale, disposée dans les plaques à chambres (22), portant un anneau d'appui, entourant le bord d'ouverture, pour soutenir une membrane (14) bombée voisine, et avec une ouverture de passage de boue (3) centrale, disposée dans les plaques support de membrane (6) et les membranes (14), sur chacun des deux côtés de laquelle est disposé un anneau de serrage (18), anneaux de serrage avec lesquels deux membranes (14) sont fixées de façon désolidarisable sur chaque plaque support de membrane (6),
caractérisé en ce que
l'anneau d'appui entourant le bord de l'ouverture de passage (4) des plaques à chambres (22) est réalisé sous la forme d'une manchette d'appui (23) en forme d'anneau, ayant une section transversale en forme de U dans la zone de bordure, et en ce que chaque branche de U (24) présente, du coté extrémité, un élément cunéiforme d'appui (27) en forme d'anneau, faisant saillie latéralement dans la direction de la membrane (14) chaque fois voisine et ne rétrécissant pratiquement pas le canal d'écoulement radial allant à l'enceinte de filtre (39) respective.

2. Filtre-presse à plaques selon la revendication 1,
caractérisé en ce que
l'élément cunéiforme d'appui (27) en forme d'anneau présente, dans sa zone périphérique, une face oblique (28) à peu près en forme d'enveloppe tronconique, descendant vers le plan médian longitudinal de plaque (AGA) avec un angle de coin (a), en vue de soutenir la membrane (14) bombée ou écartée chaque fois voisine, et présente, dans sa zone tournée radialement vers l'intérieur, une surface de guidage d'écoulement (32) à peu près en forme d'enveloppe tronconique, descendant vers le plan de plaque (AGA) avec un angle de coin (β), les éléments cunéiformes d'appui (27), ainsi que leurs faces (28 et 32) à peu près en forme d'enveloppe tronconique, étant situées radialement plus à l'extérieur que les faces de bordure extérieures (33) de chaque anneau de serrage (18) voisin appartenant à une membrane (14) voisine, dans le but de conserver un espacement (x) qui n'aille pas en diminuant en observant dans la direction radiale, entre les faces latérales (a, b) en regard l'une de l'autre des filtres à plaque à chambres (2) et des filtres à plaque à membrane (1).

3. Filtre-presse à plaques selon la revendication 2,
caractérisé en ce qu'
en observant dans la direction orientée radialement vers l'intérieur, la manchette d'appui (23) présente, à l'avant de la surface de guidage d'écoulement (32) de l'élément cunéiforme d'appui (27), une autre surface de guidage d'écoulement (34) qui mène, dans une direction orientée radialement vers l'intérieur, à un agrandissement supplémentaire de l'espacement (x) entre les faces latérales (a, b).

4. Filtre-presse à plaques selon la revendication 3,
caractérisé en ce que
l'autre surface de guidage d'écoulement (34) s'étend sous un angle de coin (γ) par rapport au plan médian longitudinal (AGA) de la plaque à chambres (22).

5. Filtre-presse à plaques selon l'une des revendications 1 à 4,
caractérisé en ce que
les angles de coin (a, b, g) sont de valeur à peu près identique.

6. Filtre-presse à plaques selon la revendication 3,
caractérisé en ce que
les deux autres surfaces de guidage d'écoulement (34) opposées de la manchette d'appui (23) se transforment l'une en l'autre de façon sensiblement arrondie dans la zone du plan médian (AGA).

7. Filtre-presse à plaques selon l'une ou plusieurs des revendications 1 à 6,
caractérisé en ce que
la manchette d'appui (23) est constituée d'un matériau flexible du genre d'un caoutchouc, élastique, par exemple d'une pièce moulée en caoutchouc, susceptible d'être reliée de façon désolidarisable à la plaque à chambres (22).

8. Filtre-presse à plaques selon l'une des revendications 1 à 6,
caractérisé en ce que
la manchette d'appui est formée d'un seul tenant sur la plaque à chambres (22) et est réalisée d'une seule pièce avec celle-ci.

9. Filtre-presse à plaques selon l'une des revendications 1 à 7,
caractérisé en ce que
la manchette d'appui est intégrée dans le tissu filtrant (38) associé à la plaque à chambres (22).

10. Filtre-presse à plaques selon l'une des revendications 1 à 7,
caractérisé en ce que
la manchette d'appui (23) est réalisée sous la forme d'une manchette annulaire monopièce ou bien de deux moitiés annulaires ayant un joint de séparation (AGA) médian.
